# EUROPÄISCHE PATENTANMELDUNG

(11) **EP 4 331 345 A1**
(43) Veröffentlichungstag der Anmeldung: **06.03.2024**
(21) Anmeldenummer: 23186506.4
(22) Anmeldetag: 19.07.2023
(51) Int. Cl.: A01D 45/02

(54) **VORSATZGERÄT**

(30) Priorität: 05.09.2022 DE 102022122443
(71) Anmelder: CLAAS Selbstfahrende Erntemaschinen GmbH, 33428 Harsewinkel (DE)
(72) Erfinder: Niermann, Martin, 33428 Harsewinkel (DE); Dudler, Heribert, 33428 Harsewinkel (DE); Schulze Selting, Stephan, 59320 Ennigerloh (DE)
(74) Vertreter: CLAAS Gruppe

(57) **Zusammenfassung**

Die Erfindung betrifft ein Vorsatzgerät (1) zum Ernten von in Reihen stehendem Erntegut, zumindest zwei achsparallel zueinander angeordnete Pflückeinheiten (8) umfassend, die jeweils zumindest abschnittsweise von einer sich in Längsrichtung der Pflückeinheit (8) erstreckenden, vorzugsweise mehrteiligen, Abdeckung (13) bedeckt sind, wobei die Elastizität der Abdeckung (13) einstellbar ist.

## Beschreibung

Die Erfindung betrifft ein Vorsatzgerät zum Ernten von in Reihen stehendem Erntegut gemäß dem Oberbegriff des Anspruchs 1.

Vorsatzgeräte der eingangs genannten Art kommen zum Einsatz, um in Reihen stehendes, stängeliges Erntegut wie Mais, Sonnenblumen oder dergleichen zu ernten. Hierzu wird in Reihen mit bestimmten Abständen zueinander angeordnetes stängeliges Erntegut an dem Erntevorsatz achsparallel zueinander angeordneten Pflückeinheiten zugeführt, welche sich im Wesentlichen parallel zu den Reihen mit Erntegut erstrecken. Zur präzisen und möglichst verlustfreien Zuführung des stängeligen Erntegutes, das heißt ohne Verluste der Fruchtstände beziehungsweise Spritzkornverluste, sind in der Regel mehrteilige Abdeckungen oberhalb der Pflückeinheiten angeordnet, welche diese abschnittsweise abdecken.

Die Qualität der Zuführung wird beispielsweise durch ungleichmäßige Reihenabstände des Erntegutes, Richtungswechsel im Feld oder das Ernten am Hang beeinflusst. Des Weiteren beeinflusst die Ausgestaltung der Abdeckungen das Zuführverhalten des stängeligen Erntegutes während der Zuführphase zu den Pflückeinheiten, von denen die Fruchtstände von den Stängeln abgetrennt werden. Für einen verlustarmen Pflückvorgang ist es erforderlich, dass insbesondere die gepflückten Maiskolben beim Auftreffen auf der Oberfläche der Abdeckung abgedämpft und in den Pflückspalt des Vorsatzgeräts geleitet werden. Die Federeigenschaft und das Dämpfungsverhalten der Abdeckung nimmt somit besonderen Einfluss auf eine verlustarme Pflückfunktion. Bei einer zu weichen Oberfläche der Abdeckungen wird diese beim Aufprall eines Maiskolbens lokal eingedrückt und federt anschließend zurück. Dieses Verhalten führt zum sogenannten Kolbenspringen. Die Kolben werden hierbei schlimmstenfalls durch das Zurückfedern wieder auf das Feld befördert. Bei einer zu harten Oberfläche der Abdeckung ist eine Dämpfung der auf diese auftreffenden Maiskolben derart gering, sodass diese nach einem Aufprall ebenfalls aus dem Vorsatzgerät herausspringen. Üblicherweise sind die Abdeckungen der Pflückeinheiten aus Polyethylen hergestellt, welches stark temperaturabhängige Feder- und Dämpfungseigenschaften aufweist. Darüber hinaus nehmen die Eigenschaften des Ernteguts, wie beispielsweise die Feuchtigkeit und das Gewicht der Maiskolben, einen wesentlichen Einfluss auf das Feder- und Dämpfungsverhalten beim Auftreffen auf die Abdeckungen.

Ein derartiges Vorsatzgerät mit einer aus Polyethylen bestehenden Abdeckung der Pflückeinheiten ist aus der US 5910092 A bekannt geworden.

Es ist Aufgabe der Erfindung, die beschriebenen Nachteile des Standes der Technik zu vermeiden und insbesondere eine Abdeckung für eine Pflückeinheit eines Vorsatzgeräts zu schaffen, die ein an unterschiedliche Erntebedingungen anpassbares Feder- und/oder Dämpfungsverhalten aufweist.

Diese Aufgabe wird erfindungsgemäß durch die kennzeichnenden Merkmale des Anspruchs 1 gelöst.

Gemäß Anspruch 1 wird ein Vorsatzgerät zum Ernten von in Reihen stehendem Erntegut vorgeschlagen, zumindest zwei achsparallel zueinander angeordnete Pflückeinheiten umfassend, die jeweils zumindest abschnittsweise von einer sich in Längsrichtung der Pflückeinheit erstreckenden, vorzugsweise mehrteiligen, Abdeckung bedeckt sind, wobei die Elastizität der Abdeckung einstellbar ist. Die Elastizität hängt von der in der Abdeckung vorliegenden mechanischen Spannung ab und beeinflusst das Dehnungsverhalten der Abdeckung beim Auftreffen von Erntegut, insbesondere Maiskolben, auf die Oberfläche der Abdeckung. Mit einer Veränderung der Elastizität verändert sich zugleich das Feder und Dämpfungsverhalten der Abdeckung, sodass eine Anpassbarkeit des Feder- und Dämpfungsverhaltens an die Erntebedingungen ermöglicht wird.

Eine vorteilhafte Ausgestaltung sieht vor, dass die Pflückeinheit eine Spannvorrichtung zum Einstellen der Elastizität der Abdeckung umfasst. Eine derartige Spannvorrichtung ermöglicht einem Bediener die mechanische Spannung und die damit einhergehende Elastizität in der Mantelfläche der Abdeckung einzustellen. Das Deformationsverhalten der Abdeckung ist somit einstellbar. Der Bediener kann mittels der Spannvorrichtung das Feder- und Dämpfungsverhalten der Abdeckung an die Erntebedingungen anpassen. Dem Bediener wird es somit ermöglicht beim Auftreten von Kolbenspringen das Feder- und Dämpfungsverhalten derart anzupassen, sodass die Kolben weniger stark von der Abdeckung zurückgeworfen werden.

Gemäß einer vorteilhaften Weiterbildung kann die Spannvorrichtung zum Ausüben einer Druckkraft auf die Unterseite der Abdeckung eingerichtet sein, wobei vorzugsweise die Druckkraft einstellbar ist. Als Unterseite ist im Sinne der vorliegenden Anmeldung die im Betriebszustand dem Untergrund des Vorsatzgeräts zugewandte Seite der Mantelfläche der Abdeckung zu verstehen. Die Spannvorrichtung kann vorzugsweise dazu vorgesehen und eingerichtet sein, flächig auf die Unterseite der Abdeckung eine Druckkraft auszuüben. Die Druckkraft bewirkt eine Deformation der Abdeckung und eine damit einhergehende Veränderung der Spannung sowie des Feder- und Dämpfungsverhaltens der Abdeckung beim Auftreffen von Erntegut, insbesondere Maiskolben.

Eine vorteilhafte Ausgestaltung sieht vor, dass die Spannvorrichtung sich in Längsrichtung der Pflückeinheit erstreckt und vorzugsweise beabstandet zu den Randabschnitten der Abdeckung angeordnet ist. Insbesondere kann sich die Spannvorrichtung in Längsrichtung mittig entlang der Unterseite der Abdeckung erstrecken. Hierdurch ist die Druckkraft symmetrisch auf die Abdeckung übertragbar.

Um die Unterfläche der Abdeckung flächig mit einer Druckkraft zu beaufschlagen, ist es besonders bevorzugt, wenn die Spannvorrichtung ein einen Aufnahmeraum ausbildendes Profilelement umfasst, wobei in dem Aufnahmeraum ein elastisches Kontaktelement angeordnet ist, wobei das Kontaktelement abschnittsweise an der Abdeckung anliegt.

Vorzugsweise kann das Profilelement um eine Drehachse schwenkbeweglich angeordnet sein, wobei das Profilelement mittels einer Stellvorrichtung in seiner Position relativ zu der Abdeckung verstellbeweglich ist. Die Stellvorrichtung kann zum Verschwenken des Profilelements hin zu der Unterseite der Abdeckung oder zum Verschwenken des Profilelements in die entgegengesetzte Richtung eingerichtet sein. Durch die Stellvorrichtung ist die von dem Kontaktelement auf die Unterseite ausgeübte Druckkraft und damit die Spannung sowie die Elastizität in der Mantelfläche der Abdeckung einstellbar.

Hierbei kann das elastische Kontaktelement als Gummi, vorzugsweise Moosgummi, ausgebildet sein. Gummi, ermöglicht ein schonendes beaufschlagen der Abdeckung mit einer Druckkraft.

In einer weiteren vorteilhaften Ausgestaltung kann das elastische Kontaktelement als ein mit Druckluft beaufschlagbarer Schlauch ausgebildet sein. Hierbei ist auf einfache Art und Weise durch verändern der in dem Schlauch befindlichen Luftmenge die von dem Kontaktelement auf die Abdeckung wirkende Druckkraft einstellbar.

Eine besonders bevorzugte Ausgestaltung sieht vor, dass die Abdeckung mehrteilig ausgebildet ist, wobei die Abdeckung eine vordere Teilerspitze und eine hintere Teilerhaube umfasst, wobei in Betriebsstellung des Vorsatzgeräts die Teilerspitze und die Teilerhaube im Wesentlichen fluchtend angeordnet sind, wobei der Teilerspitze und der Teilerhaube jeweils eine Spannvorrichtung zum Einstellen der Elastizität zugeordnet ist, sodass die Spannung der Abdeckungsteile individuell einstellbar ist.

Vorzugsweise können die Teilerspitze und die Teilerhaube jeweils einschalig ausgebildet sein. Hierdurch ist das Feder- und Dämpfungsverhalten bzw. die mechanische Spannung der Oberseite mittels einer an der gegenüberliegenden Unterseite befindlichen Spannvorrichtung auf einfache Art und Weise einstellbar.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung eines Vorsatzgeräts zum Ernten von in Reihen stehendem Erntegut in einer Draufsicht;
- Figur 2: eine schematische Darstellung einer Teilerspitze mit einer Spannvorrichtung;
- Figur 3: eine schematische Darstellung eines unterhalb der Teilerspitze befindlichen Rahmens mit einem Profilelement der Spannvorrichtung;
- Figur 4: eine schematische Darstellung einer Spannvorrichtung;
- Figur 5: eine schematische Darstellung einer Teilerhaube;
- Figur 6: eine schematische Darstellung eines unterhalb der Teilerhaube befindlichen Rahmens mit einem Profilelement der Spannvorrichtung.

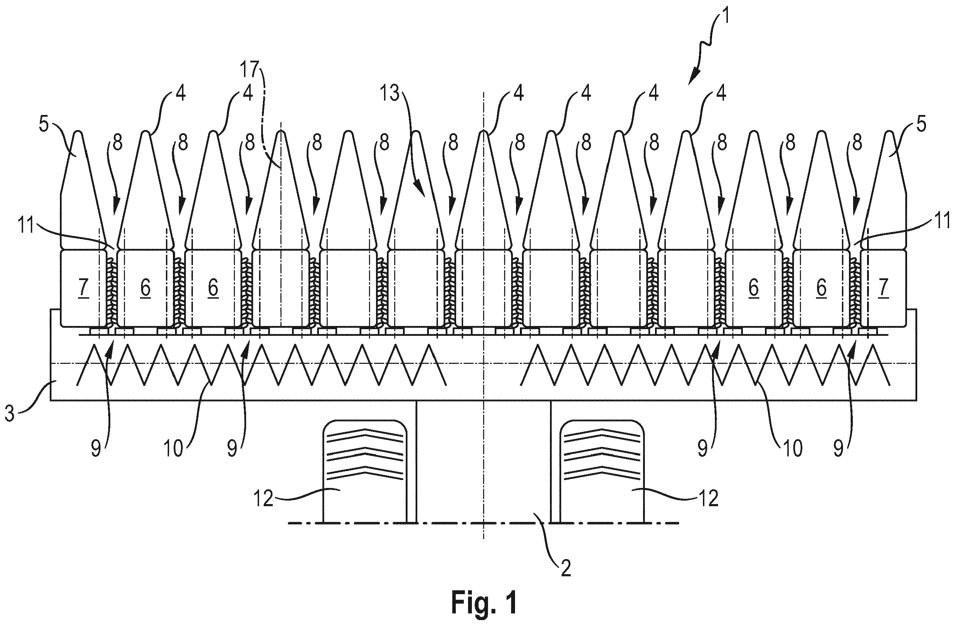

Die Darstellung in Fig.1 zeigt eine schematische Darstellung eines Vorsatzgeräts 1 zum Ernten von in Reihen stehendem Erntegut in einer Draufsicht. Das Vorsatzgerät 1 kommt insbesondere zum Ernten von Mais oder dergleichen Körnerfrüchten zur Anwendung. Das Vorsatzgerät 1 stellt ein Pflückvorsatzgerät für einen Mähdrescher oder einen Feldhäcksler dar. Bei dem dargestellten Ausführungsbeispiel ist dem Vorsatzgerät 1 ein Schrägförderer 2 eines Mähdreschers nachgeordnet, der das Erntegut, beispielsweise Maiskolben, dem Bearbeitungsteil des über Räder 12 auf dem Boden abgestützten Mähdreschers oder Feldhäckslers zuführen kann.

Das Vorsatzgerät 1 umfasst einen Maschinenrahmen 3, eine mehrteilige Abdeckung 13, die aus vorderen Teilerspitzen 4 sowie hinteren Teilerhauben 6 bzw. äußeren Abteilern 5 und äußeren Teilerhauben 7 bestehen, nebeneinanderliegende Pflückeinheiten 8 mit paarweise angeordneten Pflückwalzen 9, die unterhalb der sie teilweise überdeckenden Teilerhauben 6 und äußeren Teilerhauben 7 angeordnet sind, und hinter den Pflückeinheiten 8 liegende Querfördervorrichtungen, beispielsweise Querförderschnecken 10. Zur Abgabe des gepflückten Erntegutes an den Schrägförderer 2 des Mähdreschers oder Feldhäckslers weist der Maschinenrahmen 3 eine im Wesentlichen mittig angeordnete Öffnung auf. Der als Pflückspalt 11 bezeichnete Abstand der Pflückwalzen 9 ist veränderbar, so dass sich eine variable Weite des Pflückspaltes 11 einstellen lässt.

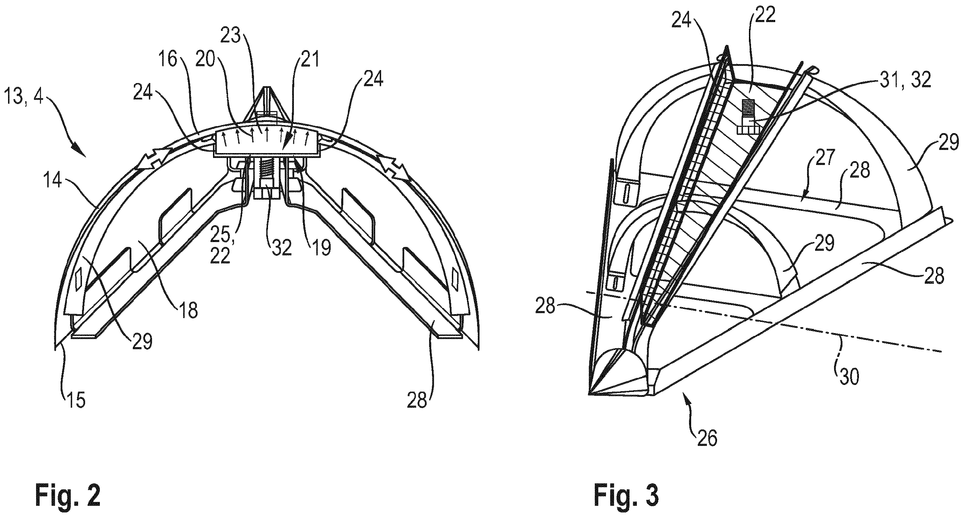

Die Teilerspitze 4 ist als zur Längsachse 17 der Teilerspitze 4 achsensymmetrisches Hohlprofil ausgeführt und weist in axialer Richtung einen im Wesentlichen bogenförmigen Verlauf ihrer Mantelfläche 14 auf. Wie Fig. 2 zeigt, ist die Unterseite 18 der Teilerspitze 4 offen ausgeführt und von Randabschnitten 15 begrenzt, welche in einer gemeinsamen horizontalen Ebene liegen. Ausgehend von einem vorderen, dem Maschinenrahmen 3 abgewandten Ende nimmt der Radius der Teilerspitze 4 in Richtung des hinteren, dem Maschinenrahmen 3 zugewandten Ende 16 der Teilerspitze 4 zu, so dass sich ein zumindest abschnittsweise kegelstumpfförmiger Aufbau einstellt. Als Unterseite 18 der Teilerspitze 4 bzw. der Abdeckung 13 ist im Sinne der vorliegenden Anmeldung die Seite zu verstehen, welche im Betriebszustand den Pflückwalzen 9 zugewandt ist.

Die Pflückeinheiten 8 umfassen jeweils eine Spannvorrichtung 19 zum Einstellen einer Elastizität in den Teilerspitzen 4. Die Spannvorrichtung 19 ist an der Unterseite 18 der Teilerspitze 4 und beabstandet zu dessen Randabschnitten 15 angeordnet. Die Spannvorrichtung 19 erstreckt sich in Längsrichtung der Teilerspitze 4 und ist dazu vorgesehen und eingerichtet eine Druckkraft 20 flächig auf die Unterseite 18 bzw. auf die Mantelfläche 14 der Teilerspitze 4 auszuüben. Hier und vorzugsweise ist die Spannvorrichtung 19 im oberen Hochpunkt der bogenförmigen Teilerspitze 4 angeordnet. Mit anderen Worten ausgedrückt, ist die Spannvorrichtung 19 im First der Teilerspitze 4 angeordnet. Die Druckkraft 20 bewirkt ein Verformen der Teilerspitze 4 und eine damit einhergehende Veränderung der in der Teilerspitze 4 vorliegenden mechanischen Spannung. Die Elastiziät und das Deformationsverhalten der Teilerspitze 4 sind abhängig von der in dem Material vorliegenden mechanische Spannung. Die Feder- und Dämpfungseigenschaften des Materials der Teilerspitze 4 sind ebenfalls abhängig von der mechanischen Spannung. Mittels einer Veränderung der mechanischen Spannung und der damit einhergehenden Elastizität durch die Spannvorrichtung 19 ist somit das Feder- und Dämpfungsverhalten einstellbar, sodass das Feder- und Dämpfungsverhaltens an unterschiedliche Erntebedingungen anpassbar ist.

Die Spannvorrichtung 19 umfasst ein einen Aufnahmeraum 21 ausbildendes Profilelement 22 mit einem in dem Aufnahmeraum 21 befindlichen und obenseitig aus dem Aufnahmeraum 21 herausragenden Kontaktelement 23. Das Profilelement 22 weist ein langgestrecktes Hohlprofil mit einem eckigen Querschnitt auf. Das Profilelement 22 bildet den Aufnahmeraum 21 aus, der durch Seitenwände 24 und einen flächigen Bodenabschnitt 25 begrenzt ist. Der Aufnahmeraum 21 ist an seiner oberen, der Teilerspitze 4 zugewandten Seite geöffnet. In dem Aufnahmeraum 21 ist das elastisches Kontaktelement 23 angeordnet, wobei das Kontaktelement 23 flächig an der als Teilerspitze 4 ausgebildeten Abdeckung 13 anliegt.

Die Teilerspitze 4 ist auf einem in Fig. 3 dargestellten Rahmen 26 gehaltert. Der Rahmen 26 umfasst einen im Wesentlichen dreiecksförmigen Unterbau 27, an dem die Randabschnitte 15 der Teilerspitzen 4 im montierten Zustand befestigt sind. Der Unterbau 27 wird von dreieckig zueinander angeordneten Schienen 28 gebildet, die sich in einer Ebene befinden und eine offene Struktur ausbilden. Auf dem Unterbau 27 sind beabstandet zueinander angeordnete bogenförmige Auflageelemente 29 angeordnet, die sich ausgehend von dem Unterbau 27 erstrecken. Die Teilerspitze 4 wird abschnittsweise von den Auflageelementen 29 abgestützt. Es ist aber auch denkbar, dass die Auflageelemente 29 kontaktlos zu der Teilerspitze 4 angeordnet sind und dazu vorgesehen und eingerichtet sind, um ein zu starkes Verformen der Teilerspitze 4 zu vermeiden.

In Fig. 3 ist die Anordnung des Profilelements 22 schematisch dargestellt. In einer ersten Ausführungsform ist das Profilelement 22 schwenkbeweglich um eine Drehachse 30 angeordnet. Die Drehachse 30 befindet sich in einem vorderen, dem Maschinenrahmen 3 abgewandten Bereich der Teilerspitze 4. Zur Ausbildung der Drehachse 30 ist das Profilelement 22 schwenkbeweglich an dem Rahmen 26 befestigt. Mittels einer Stellvorrichtung 31 ist das Profilelement 22 um die Drehachse 30 verschwenkbar. Die Stellvorrichtung 31 ist hier als Stellschraube 32 ausgebildet. Die Stellschraube 32 ist mittels eines nicht dargestellten Verbindungselements an dem Rahmen 26 angeordnet. Eine Drehbewegung der Stellschraube 32 bewirkt, dass sich die Schraube 32 hin zu dem Profilelement 22 bewegt und dieses in Richtung der Teilerspitze 4 verschwenkt. Das in dem Aufnahmeraum 21 des Profilelements 22 befindliche Kontaktelement 23 wird durch eine Verschwenkbewegung verstärkt gegen die Teilerspitze 4 gepresst, sodass sich die zwischen der Teilerspitze 4 und dem Kontaktelement 23 wirkende Druckkraft 20 erhöht und eine Veränderung der mechanischen Spannung in der Teilerspitze 4 bewirkt. In dieser Ausführungsform mit einem verschwenkbaren Profilelement 22 ist das Kontaktelement 23 als Moosgummi ausgeführt.

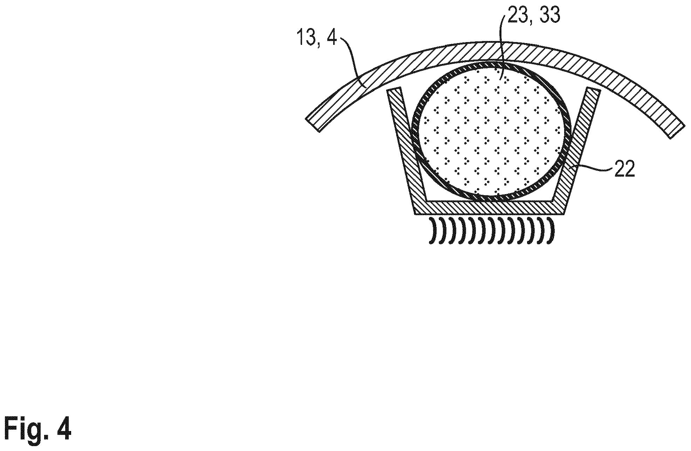

In einer in Fig. 4 schematisch dargestellten alternativen Ausführungsform ist das Profilelement 22 ortsfest an dem Rahmen 26 angeordnet, wobei das Kontaktelement 23 als mit Druckluft beaufschlagbarer Schlauch 33 ausgeführt ist. In dieser Ausführungsform ist die Druckkraft 20 mittels der dem Schlauch 33 zugeführten Druckluftmenge einstellbar.

Wie Fig. 1 zeigt, umfasst die Abdeckung 13 eine der vorderen Teilerspitze 4 nachgeordnete hintere Teilerhaube 6. In einer Betriebsstellung des Vorsatzgeräts 1 sind die Teilerspitze 4 und die Teilerhaube 6 im Wesentlichen fluchtend angeordnet.

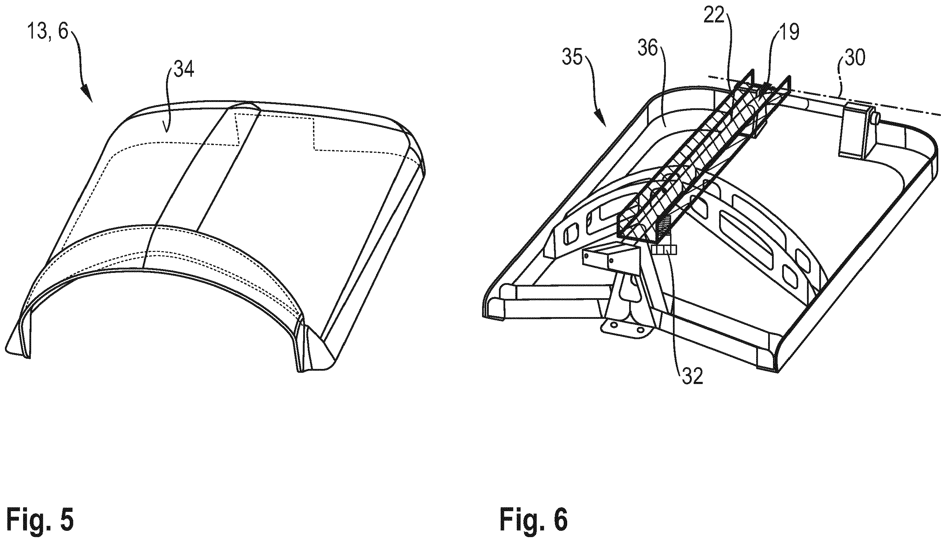

Die in Fig. 5 abgebildete, als Teilerhaube 6 ausgebildete Abdeckung 13, ist als zur Längsachse 17 der Teilerhaube 6 achsensymmetrisches Hohlprofil ausgeführt und weist in axialer Richtung einen im Wesentlichen bogenförmigen Verlauf seiner Mantelfläche 34 auf. Die Teilerhaube 6 unterscheidet sich von der Teilerspitze 4 im Wesentlichen dadurch, dass das Ausmaß der Teilerhaube 6 ausgehend von einem vorderen, dem Maschinenrahmen 3 abgewandten Ende in Richtung des hinteren, dem Maschinenrahmen 3 zugewandten Endes im Wesentlichen unverändert ist.

Fig. 6 zeigt den Rahmen 35 der Teilerhaube 6. Dieser unterscheidet sich von dem Rahmen 26 der Teilerspitze 4 im Wesentlichen dadurch, dass der Unterbau 36 ein im Wesentlichen rechteckiges Profil aufweist. An dem Rahmen 35 ist das Profilelement 22 einer der Teilerhaube 6 zugeordneten weiteren Spannvorrichtung 19 dargestellt. Die Spannvorrichtungen 19 der Teilerhaube 6 sowie die Spannvorrichtung 19 der Teilerspitze 4 sind identisch ausgeführt und weisen dieselben zuvor beschrieben Ausführungsvarianten auf, sodass die zuvor beschriebenen Ausführungen auch auf die der Teilerhaube 6 zugeordneten Spannvorrichtung 19 zutreffen und nicht weitere beschrieben werden.

Die Mantelfläche 14, 34 der Teilerspitze 4 und der Teilerhaube 6 sind jeweils einschalig ausgebildet. Hier und vorzugsweise bestehen die Mantelflächen 14, 34 der Teilerhaube 6 und der Teilerspitze 4 aus Polyethylen.

**Bezugszeichenliste:**

| | | | |
|---|---|---|---|
| 1 | Vorsatzgerät | 34 | Mantelfläche |
| 2 | Schrägförderer | 35 | Rahmen |
| 3 | Maschinenrahmen | 36 | Unterbau |
| 4 | Teilerspitze | | |
| 5 | Abteiler | | |
| 6 | Teilerhaube | | |
| 7 | Äußere Teilerhauben | | |
| 8 | Pflückeinheit | | |
| 9 | Pflückwalze | | |
| 10 | Querförderschnecke | | |
| 11 | Pflückspalt | | |
| 12 | Räder | | |
| 13 | Abdeckung | | |
| 14 | Mantelfläche | | |
| 15 | Randabschnitt | | |
| 16 | Hinteres Ende | | |
| 17 | Längsachse | | |
| 18 | Unterseite | | |
| 19 | Spannvorrichtung | | |
| 20 | Druckkraft | | |
| 21 | Aufnahmeraum | | |
| 22 | Profilelement | | |
| 23 | Kontaktelement | | |
| 24 | Seitenwand | | |
| 25 | Bodenabschnitt | | |
| 26 | Rahmen | | |
| 27 | Unterbau | | |
| 28 | Schiene | | |
| 29 | Auflageelement | | |
| 30 | Drehachse | | |
| 31 | Stellvorrichtung | | |
| 32 | Stellschraube | | |
| 33 | Schlauch | | |

## Patentansprüche

1. Vorsatzgerät (1) zum Ernten von in Reihen stehendem Erntegut, zumindest zwei achsparallel zueinander angeordnete Pflückeinheiten (8) umfassend, die jeweils zumindest abschnittsweise von einer sich in Längsrichtung der Pflückeinheit (8) erstreckenden, vorzugsweise mehrteiligen, Abdeckung (13) bedeckt sind, **dadurch gekennzeichnet, dass** die Elastizität der Abdeckung (13) einstellbar ist.

2. Vorsatzgerät (1) nach Anspruch 1, **dadurch gekennzeichnet, dass** die Pflückeinheit (8) eine Spannvorrichtung (19) zum Einstellen der Elastizität der Abdeckung (13) umfasst.

3. Vorsatzgerät (1) nach Anspruch 2, **dadurch gekennzeichnet, dass** die Spannvorrichtung (19) zum Ausüben einer Druckkraft (20) auf die Unterseite (18) der Abdeckung (13) eingerichtet ist, wobei vorzugsweise die Druckkraft (20) einstellbar ist.

4. Vorsatzgerät (1) nach einem der Ansprüche 2 oder 3, **dadurch gekennzeichnet, dass** die Spannvorrichtung (19) sich in Längsrichtung der Pflückeinheit (8) erstreckt und vorzugsweise beabstandet zu den Randabschnitten (15) der Abdeckung (13) angeordnet ist.

5. Vorsatzgerät (1) nach einem der Ansprüche 2 bis 4, **dadurch gekennzeichnet, dass** die Spannvorrichtung (19) ein einen Aufnahmeraum (21) ausbildendes Profilelement (22) umfasst, wobei in dem Aufnahmeraum (21) ein elastisches Kontaktelement (23) angeordnet ist, wobei das Kontaktelement (23) abschnittsweise an der Abdeckung (13) anliegt.

6. Vorsatzgerät (1) nach Anspruch 5, **dadurch gekennzeichnet, dass** das Profilelement (22) um eine Drehachse (30) schwenkbeweglich angeordnet ist, wobei das Profilelement (22) mittels einer Stellvorrichtung (31) in seiner Position relativ zu der Abdeckung (13) verstellbeweglich ist.

7. Vorsatzgerät (1) nach einem der Ansprüche 5 bis 6, **dadurch gekennzeichnet, dass** das elastische Kontaktelement (23) als Gummi ausgebildet ist.

8. Vorsatzgerät (1) nach einem der Ansprüche 5 bis 7, **dadurch gekennzeichnet, dass** das elastische Kontaktelement (23) als ein mit Druckluft beaufschlagbarer Schlauch (33) ausgebildet ist.

9. Vorsatzgerät (1) nach einem der Ansprüche 2 bis 8, **dadurch gekennzeichnet, dass** die Abdeckung (13) mehrteilig ausgeführt ist, wobei die Abdeckung (13) eine Teilerspitze (4) und eine Teilerhaube (6) umfasst, wobei in einer Betriebsstellung des Vorsatzgeräts (1) die Teilerspitze (4) und die Teilerhaube (6) im Wesentlichen fluchtend angeordnet sind, wobei der Teilerspitze (4) und der Teilerhaube (6) jeweils eine Spannvorrichtung (19) zugeordnet ist.

10. Vorsatzgerät (1) nach Anspruch 9, **dadurch gekennzeichnet, dass** die Teilerspitze (4) und die Teilerhaube (6) jeweils einschalig ausgebildet sind.

11. Vorsatzgerät (1) nach einem der Ansprüche 9 bis 10, **dadurch gekennzeichnet, dass** die Teilerspitze (4) und die Teilerhaube (6) jeweils aus Kunststoff, insbesondere Polyethylen, bestehen.
